# EUROPEAN PATENT APPLICATION

(11) **EP 4 420 572 A1**
(43) Date of publication of application: **28.08.2024**
(21) Application number: 24157459.9
(22) Date of filing: 13.02.2024
(51) Int. Cl.: A47J 31/54, A47J 31/36

(54) **COFFEE EXTRACTION UNIT, PARTICULARLY FOR AN ESPRESSO COFFEE MAKING MACHINE**

(30) Priority: 23.02.2023 IT 202300003111
(71) Applicant: La Piccola S.r.l., 25080 Padenghe Sul Garda (BS) (IT)
(72) Inventor: VENTURELLI, Gianluca, 25080 Padenghe sul Garda BS (IT)
(74) Representative: Modiano, Micaela Nadia

(57) **Abstract**

A coffee extraction unit (1), particularly for an espresso coffee making machine, comprising a main body (2) shaped for the engagement thereof with a coffee filter holder (3) and defining within it a three-way valve (4) located between: a heated water delivery chamber (5), hydraulically connected to a system for delivering water for coffee preparation, a supply conduit (6) of the coffee filter holder (3), and a residual water discharge chamber (7) which is hydraulically connected to a system for discharging the residual water from the preparation of coffee, and further comprising an electrical heat exchanger (13) installed directly on the main body (2) between the delivery system and the delivery chamber (5), with the heat exchanger (13) being passed through by the water for coffee preparation.

## Description

The present invention relates to a coffee extraction unit, particularly for an espresso coffee making machine.

As is known, espresso coffee machines typically comprise an electric water boiler (vessel or coil), arranged in a portion of the machine spaced apart from the part for dispensing the coffee, which by means of a special system supplies the coffee extraction unit.

In more detail, in order to avoid placing a continuous load on the water boiler, this water boiler has a large internal volume, sufficient for the preparation of a great many coffees, and it needs to be constantly supplied, or in any case pre-heated, in order to promptly respond to the demand for hot water for dispensing the coffee.

This entails a series of drawbacks, which include an excessive consumption of electric current in relation to the number of coffees prepared, and the stagnation of water in the water boiler with the risk that the water absorbs the heavy metals of which the water boiler is made.

The aim of the present invention consists in providing a coffee extraction unit, particularly for espresso coffee making machines, which is capable of overcoming the above-mentioned drawbacks.

Within this aim, an object of the present invention consists in providing a coffee extraction unit which ensures the highest guarantees of reliability, operation and efficiency.

Another object of the present invention is to provide a coffee extraction unit with technologies that are per se known and which are such as to make it economically competitive.

This aim and these and other objects which will become better apparent hereinafter are achieved by a coffee extraction unit, particularly for an espresso coffee making machine, comprising a main body shaped for the engagement thereof with a coffee filter holder and defining within it a three-way valve located between: a heated water delivery chamber, hydraulically connected to a system for delivering water for coffee preparation, a supply conduit of said coffee filter holder, and a residual water discharge chamber which is hydraulically connected to a system for discharging the residual water from the preparation of coffee; characterized in that it comprises an electrical heat exchanger installed directly on said main body between said delivery system and said delivery chamber, said heat exchanger being passed through by said water for coffee preparation.

Further characteristics and advantages of the invention will become more apparent from the detailed description of a preferred, but not exclusive, embodiment of a coffee extraction unit, particularly for an espresso coffee making machine, illustrated by way of non-limiting example with the aid of the accompanying drawings wherein:
- Figure 1 is a first perspective view, from the front, of the heat exchanger used in the extraction unit according to the present invention;
- Figure 2 is a second perspective view, from behind, of the heat exchanger shown in Figure 1;
- Figure 3 is a third, exploded perspective view of the heat exchanger shown in the previous figures;
- Figure 4 is a fourth, cross-sectional perspective view, taken along a longitudinal plane, of the heat exchanger shown in the previous figures;
- Figure 5 is a cross-sectional perspective view of the extraction unit according to the invention, in its inactive configuration;
- Figure 6 is a cross-sectional perspective view of the extraction unit shown in Figure 5, in its extracted configuration;
- Figure 7 is a cross-sectional perspective view of the extraction unit shown in Figures 5 and 6, in its discharge configuration.

With reference to the figures, the coffee extraction unit, particularly for an espresso coffee making machine, according to the present invention, generally designated by the reference numeral 1, comprises a main body 2 shaped for the engagement thereof with a coffee filter holder 3 and defines within it a three-way valve 4 located between: a heated water delivery chamber 5, hydraulically connected to a system for delivering water for coffee preparation, a supply conduit 6 of the coffee filter holder 3, and a residual water discharge chamber 7 which is hydraulically connected to a system for discharging the residual water from the preparation of coffee.

In more detail, in the above embodiment, the three-way valve 4 is of the type actuated manually by means of an actuation lever 8 which has, at its fulcrum, an actuation selector 9 with a cam-like profile placed in a central chamber 10 located between the delivery and discharge chambers 5 and 7 and the supply conduit 6.

Conveniently, the delivery and discharge chambers 5 and 7 are fitted with normally-closed springback flow control elements 11 and 12 so as to be hydraulically separated from each other.

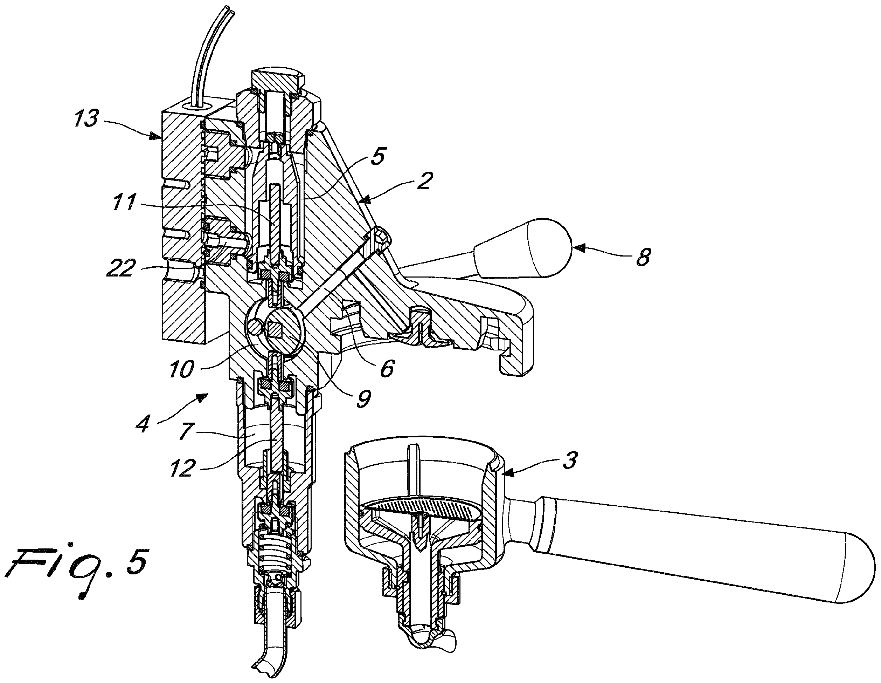

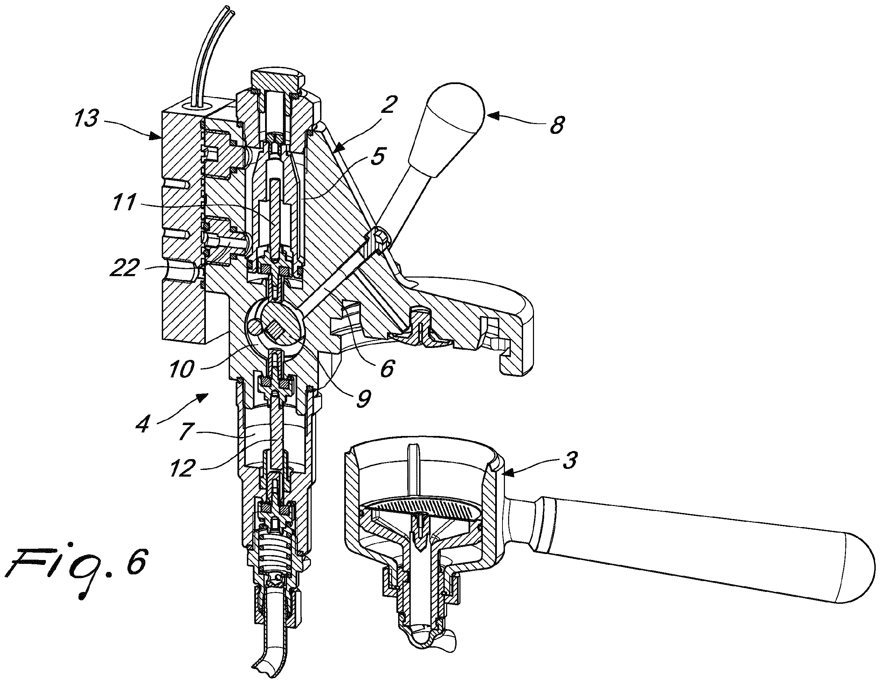

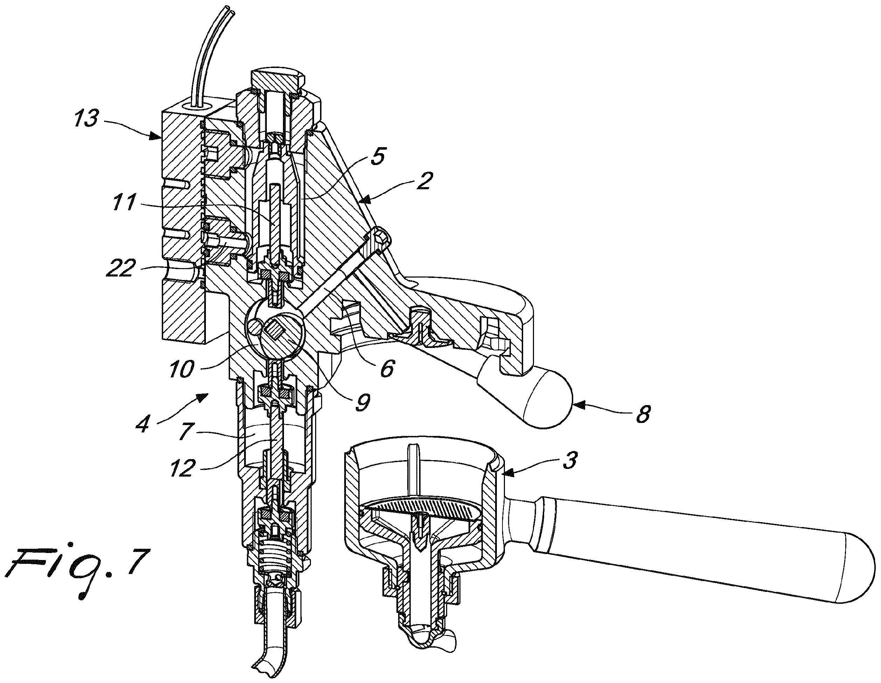

Advantageously, the actuation selector 9 is configured for the selective switching of the three-way valve 4 into:
- an inactive configuration, shown in Figure 5 and in which the actuation selector 9 is placed in a position of disengagement from the flow control elements 11 and 12 of the delivery and discharge chambers 5 and 7 so that the latter are in their closed position;
- a dispensing configuration, shown in Figure 6 and in which the actuation selector 9 is placed in a position of disengagement from the flow control element 12 of the discharge chamber 7 and of engagement with the flow control element 11 of the delivery chamber 5 for the passage of the heated water from the delivery chamber 5 to the supply conduit 6, passing through the central chamber 10; and
- a discharge configuration, shown in Figure 7 and in which the actuation selector 9 is placed in a position of disengagement from the flow control element 11 of the delivery chamber 5 and of engagement with the flow control element 12 of the discharge chamber 7 for the discharge of the residual water from the central chamber 10 to the discharge chamber 7.

More specifically, the actuation selector 9 with a cam-like profile comprises a cylindrical body having a circular base which is integral in rotation with the actuation lever 8 at the fulcrum of the latter and eccentrically with respect to its central axis.

With regard to the coffee filter holder 3, this can be of the traditional bayonet-coupled type and therefore will not be described further.

According to the invention, the extraction unit 1 comprises an electrical heat exchanger 13 installed directly on the main body 2 between the delivery system and the delivery chamber 5.

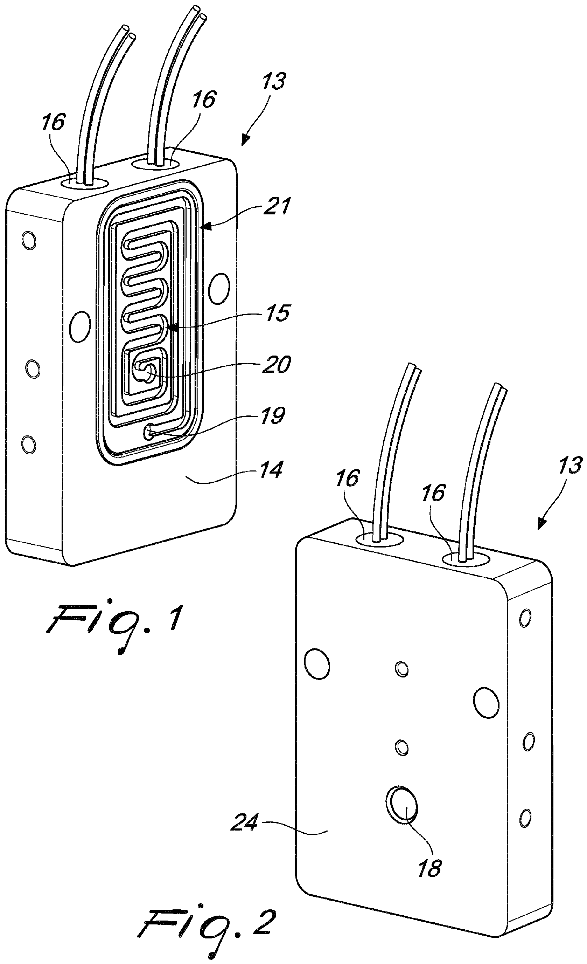

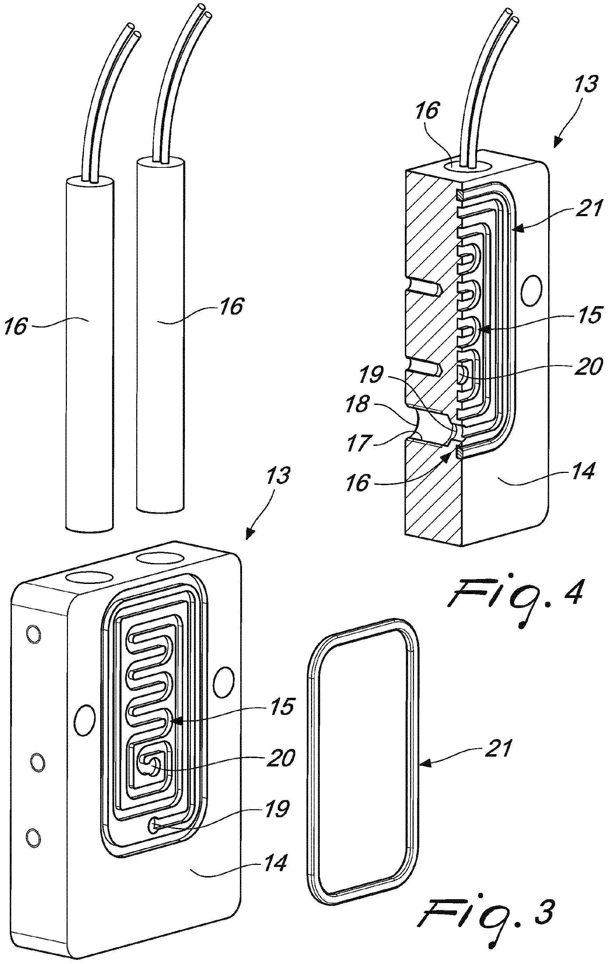

In more detail, with reference to Figures 1 to 4, the heat exchanger 13, which is passed through by the water for preparing the coffee, has a geometric shape substantially in the form of a rectangular parallelepiped with a front face 14 associated with the main body 2 at the delivery chamber 5, and has a heating channel 15 passed through by the water for dispensing coffee and accommodates two electric heating elements 16 inside it which are connectable to an electric current line for heating it.

In the above embodiment, the heating channel 15 is defined mainly externally on the front face 14, and an annular gasket 21 is accommodated in an adapted seat and is arranged between the front face 14 and the main body 2 externally to the heating channel 15.

More specifically, in the above embodiment, the heating channel 15, following the direction of flow of the water for preparing the coffee, comprises:
- a first, straight portion 17, which passes through the heat exchanger 13 and extends from an inlet 18, located on an outer face 24_of the heat exchanger 13 on the opposite side to the front face 14 and functionally connectable to the delivery system, to an outlet 19, located on the front face 14;
- a second, spiral portion, located on the front face 14 and extending from the outlet 19 in a radially convergent manner;

- a third, zigzag portion, located on the front face 14 and extending from the second, spiral portion in a radially internal manner with respect to the turns of the latter; and
- a fourth, spiral portion, located on the front face 14 and extending from the third, zigzag portion to a dispensing outlet 20 located on the front face 14 at a supply passage 22 of the delivery chamber 5.

The operation of the extraction unit 1 can be easily understood from the foregoing description.

In practice it has been found that the extraction unit according to the present invention achieves the set aim and objects, in that it enables:
- lower consumption of electric current than water heaters of the conventional type, by virtue of the fact that the heating of the water occurs in a limited portion of its path by means of two heating elements, for example 400/500 watt, which in a few minutes heat the heat exchanger, without therefore requiring the machine to be kept switched on all day;
- better and facilitated cleaning of limescale, by virtue of the passage of an alimentary anti-limescale element inside the heat exchanger;
- elimination of any stagnant water as it is not necessary.

The extraction unit thus conceived is susceptible of numerous modifications and variations, all of which are within the scope of the appended claims.

Moreover, all the details may be substituted by other, technically equivalent elements.

For example, the path of the heating channel can extend for a different route from that described, both outside and inside the heat exchanger.

In practice the materials employed, provided they are compatible with the specific use, and the contingent dimensions and shapes, may be any according to requirements and to the state of the art.

The disclosures in Italian Patent Application No. 102023000003111 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A coffee extraction unit (1), particularly for an espresso coffee making machine, comprising a main body (2) shaped for the engagement thereof with a coffee filter holder (3) and defining within it a three-way valve (4) located between: a heated water delivery chamber (5), hydraulically connected to a system for delivering water for coffee preparation, a supply conduit (6) of said coffee filter holder (3), and a residual water discharge chamber (7) which is hydraulically connected to a system for discharging the residual water from the preparation of coffee; **characterized in that** it comprises an electrical heat exchanger (13) installed directly on said main body (2) between said delivery system and said delivery chamber (5), said heat exchanger (13) being passed through by said water for coffee preparation.

2. The extraction unit (1) according to claim 1, **characterized in that** said heat exchanger (13) has a geometric shape substantially in the form of a rectangular parallelepiped with a front face (14) associated with said main body (2) at said delivery chamber (5), said heat exchanger (13) having a heating channel (15) passed through by said water for dispensing coffee and accommodating two electric heating elements (16) inside it which are connectable to an electric current line for heating it.

3. The extraction unit (1) according to claim 2, **characterized in that** said heating channel (15) is mainly defined externally on said front face (14) and **in that** it comprises an annular gasket (21) arranged between said front face (14) and said main body (2), externally to said heating channel (15).

4. The extraction unit (1) according to claim 2 or 3, **characterized in that** said heating channel (15), following the direction in which said water for coffee preparation passes through, comprises:
- a first, straight portion (17), which passes through said heat exchanger (13) and extends from an inlet (18), located on an outer face (24) of said heat exchanger (13) and functionally connectable to said delivery system, to an outlet (19), located on said front face (14);
- a second, spiral portion, located on said front face (14) and extending from said outlet (19) in a radially convergent manner;
- a third, zigzag portion, located on said front face (14) and extending from said second, spiral portion in a radially internal manner with respect to the turns of said second, spiral portion; and
- a fourth, spiral portion, located on said front face (14) and extending from said third, zigzag portion to a dispensing outlet (20) located on said front face (14) at a supply passage (22) of said delivery chamber (5).

5. The extraction unit (1) according to one or more of the preceding claims, **characterized in that** said three-way valve (4) is of the type actuated manually by means of an actuation lever (8) which has, at its fulcrum, an actuation selector (9) with a cam-like profile placed in a central chamber (10) located between said delivery and discharge chambers (5, 7) and said supply conduit (6), said delivery and discharge chambers (5, 7) being fitted with normally-closed springback flow control elements (11, 12) so as to be hydraulically separated from each other; said actuation selector (9) being configured for the selective switching of said three-way valve (4) into:
- an inactive configuration, in which said actuation selector (9) is placed in a position of disengagement from said flow control elements (11, 12) of said delivery and discharge chambers (5, 7) so that said flow control elements (11, 12) are in their closed position;
- a dispensing configuration, in which said actuation selector (9) is placed in a position of disengagement from said flow control element (12) of said discharge chamber (7) and of engagement with said flow control element (11) of said delivery chamber (5) for the passage of said heated water from said delivery chamber (5) to said supply conduit (6), passing through said central chamber (10); and
- a discharge configuration, in which said actuation selector (9) is placed in a position of disengagement from said flow control element (11) of said delivery chamber (5) and of engagement with said flow control element (12) of said discharge chamber (7) for the discharge of said residual water from said central chamber (10) to said discharge chamber (7).

6. The extraction unit (1) according to claim 5, **characterized in that** said actuation selector (9) with a cam-like profile comprises a cylindrical body having a circular base which is integral in rotation with said actuation lever (8) at the fulcrum of said actuation lever (8) and eccentrically with respect to its central axis.
